# FASCICULE DE BREVET EUROPEEN

(11) **EP 3 189 381 B1**
(45) Date de publication et mention de la délivrance du brevet: **25.07.2018**
(21) Numéro de dépôt: 15780914.6
(22) Date de dépôt: 04.09.2015
(51) Int. Cl.: G05B 9/03, G06F 11/20

(54) **ARCHITECTURE BI-VOIES**
ZWEIKANALIGE ARCHITEKTUR
TWO CHANNEL ARCHITECTURE

(30) Priorité: 05.09.2014 FR 1458354
(43) Date de publication de la demande: 12.07.2017
(73) Titulaire: Safran Electronics & Defense, 92100 Boulogne-Billancourt (FR); Safran Helicopter Engines, 64510 Bordes (FR)
(72) Inventeur: LIU, Céline, 92100 Boulogne-Billancourt (FR); MARTI, Nicolas, 92100 Boulogne-Billancourt (FR); LANGFORD, Stephen, 64000 Pau (FR)
(74) Mandataire: Regimbeau
(86) Numéro de dépôt international: PCT/FR2015/052344
(87) Numéro de publication internationale: WO 2016/034825

(56) Documents cités:
- EP-A1- 0 742 507
- EP-A1- 1 695 886
- EP-A2- 2 595 023
- FR-A1- 2 986 398
- US-A1- 2008 205 416

## Description

### DOMAINE TECHNIQUE GENERAL

L'invention concerne le domaine des systèmes de contrôle de vol d'aéronef.

Elle a plus particulièrement pour objet un procédé de commutation entre deux unités de traitement ou calculateurs constituant une architecture bi-voies d'un tel système.

### ETAT DE LA TECHNIQUE

Les systèmes de contrôle de vol embarqués équipant les aéronefs tels que les avions ou les hélicoptères existants exécutent des fonctions de commande et de régulation du moteur de l'aéronef assurant le bon fonctionnement de celui-ci. De telles fonctions sont critiques pour la sécurité des passagers. De tels systèmes doivent donc être résistants aux pannes.

Pour cela, les systèmes de contrôle de vol existants comprennent généralement deux unités de traitement ou calculateurs, chacune capable d'assurer le bon fonctionnement du moteur. Un tel système constitue ainsi une architecture à deux voies dans laquelle chaque voie est capable d'assurer l'exécution desdites fonctions critiques en cas de panne de l'autre voie. Parmi ces deux voies, le contrôle du moteur est généralement confié à la voie présentant le meilleur état de santé, c'est-à-dire le moins de pannes ou les pannes présentant le degré de gravité le plus faible. Cette voie est appelée voie active.

Afin d'exécuter des fonctions de commande et de régulation du moteur, chacune des voies est susceptible de commander au moins un actionneur. Ces actionneurs peuvent tomber en panne. Lorsqu'un ou plusieurs actionneurs de la voie active sont en panne, celle-ci peut ne plus être capable d'assurer correctement le contrôle du moteur. Si l'autre voie, dite passive, est dans un état de santé moins bon que celui de la voie active, elle n'est alors pas non plus en mesure d'assurer correctement le contrôle du moteur. Ainsi aucune des deux voies n'étant capable d'assurer correctement le contrôle du moteur, les fonctions critiques du système de vol peuvent alors ne plus être assurées.

Le document FR 2 986 398 A1 divulgue un dispositif de sécurité pour le contrôle d'un moteur comprenant un premier et un second capteurs redondants d'un paramètre environnemental, au moins deux voies de traitement des données mesurées par les capteurs, chacune des voies comprenant un module de commande qui permet de piloter différents actionneurs qui contrôlent le moteur. Les deux voies peuvent s'échanger un mot de santé, la voie la plus «saine» devenant active, l'autre étant alors passive. Lors qu'une panne est détectée sur l'un des composants d'une voie active, ladite voie peut devenir automatiquement passive et donner à l'autre voie une donnée définissant le nouveau statut actif de la voie n'ayant pas subie de panne.

Le document EP 2 595 023 A2 divulgue un système de contrôle de vol d'un aéronef comprenant une pluralité de voies de commande qui contrôlent une pluralité d'actionneurs, chacune avec une unité de traitement, et qui assurent une redondance de contrôle de l'opération des éléments d'un aéronef. Dans le cas de défaillance de l'unité de traitement d'une des voies de commande, il est toujours possible de commander les actionneurs de la voie concernée avec un signal de commande provenant de l'unité de traitement d'une autre voie de commande. Ceci empêche qu'une voie de commande avec une unité de commande défaillante devient inutilisable. Il existe donc un besoin d'un procédé permettant à la voie active d'assurer correctement le contrôle du moteur malgré la défaillance d'au moins un de ses actionneurs.

### PRESENTATION DE L'INVENTION

La présente invention se rapporte ainsi selon un **premier aspect** à un procédé de commutation mis en oeuvre par une première unité de traitement, dite unité de traitement locale, d'un système de contrôle de vol d'un aéronef comprenant au moins un moteur,
ladite unité de traitement locale étant configurée pour commander au moins un actionneur, dit actionneur local, de sorte à contrôler le moteur de l'aéronef, et étant configurée pour être connectée à au moins un capteur local et pour être connectée par l'intermédiaire d'au moins une liaison à une deuxième unité de traitement, dite unité de traitement opposée, configurée pour commander au moins un actionneur opposé et être connectée à au moins un capteur opposé, ladite unité de traitement locale étant en outre configurée pour être connectée à des moyens de communication de sauvegarde permettant d'assurer des échanges de données entre l'unité de traitement locale et l'unité de traitement opposée en cas de défaillances de ladite au moins une liaison les connectant, lesdits moyens de communication de sauvegarde comprenant un réseau de capteurs ou d'actionneurs et/ou un réseau sécurisé embarqué pour l'avionique,
ledit procédé comprenant des étapes de :
- envoi à l'unité de traitement opposée de données d'acquisitions relatives à l'au moins un capteur local et de données d'actionneur relatives à l'au moins un actionneur local,
- réception en provenance de l'unité de traitement opposée de données d'acquisitions relatives à l'au moins un capteur opposé et de données d'actionneur relatives à l'au moins un actionneur opposé,
- réception d'une donnée de santé relative à l'état de santé de l'unité de traitement opposée, dite donnée de santé opposée,
- détermination d'une donnée de santé relative à la santé de ladite unité de traitement locale, dite donnée de santé locale,
- commutation de ladite unité de traitement locale d'un premier état à un deuxième état, en fonction de ladite donnée de santé opposée reçue et de ladite donnée de santé locale déterminée,
lesdites étapes d'envoi, de réception de données d'acquisition et de réception d'une donnée de santé étant mises en oeuvre par l'intermédiaire de ladite au moins une liaison ou desdits moyens de communication de sauvegarde, et lesdits états étant parmi un état actif dans lequel l'unité de traitement locale assure le contrôle du moteur de l'aéronef, un état passif dans lequel l'unité de traitement locale n'assure pas le contrôle du moteur de l'aéronef et un état esclave dans lequel l'unité de traitement locale cède à l'unité de traitement opposée la commande desdits actionneurs locaux pour le contrôle du moteur de l'aéronef, dans lequel l'étape de commutation comprend:
- une étape de détermination, à partir de la donnée de santé locale, d'une donnée d'état relative à l'état de ladite unité de traitement locale et d'une donnée de statut de santé de l'unité de traitement locale relative à la capacité de l'unité de traitement locale à assurer le contrôle du moteur, et
- une étape de commutation de ladite unité de traitement locale dans l'état esclave :
- lorsque la donnée d'état indique que l'unité de traitement locale est dans un état passif et,
- lorsque la donnée de statut de santé indique un statut dans lequel :
   ▪ l'unité de traitement locale est capable de communiquer avec l'unité de traitement opposée, par exemple si au moins une des deux liaisons numériques bidirectionnelles permet d'assurer des communications entre l'unité de traitement locale et l'unité de traitement opposée,
   ▪ l'unité de traitement locale est incapable d'assurer le contrôle du moteur,
   ▪ et l'unité de traitement locale est capable de commander les actionneurs locaux.

Un tel procédé permet à chaque unité de traitement d'avoir une image complète du système global, y compris des actionneurs et capteurs connectés à l'unité de traitement opposée, afin de pouvoir assurer correctement le contrôle du moteur malgré la défaillance d'un actionneur local. Une unité de traitement incapable de contrôler le moteur de l'aéronef peut ainsi donner un accès à ses actionneurs à l'autre unité de traitement qui est dans un état actif, afin que le système de contrôle de vol puisse assurer le contrôle du moteur malgré une ou plusieurs défaillances des actionneurs de l'unité de traitement active. De plus, l'utilisation de moyens de communication de sauvegarde permet d'éviter un aveuglement total du système bi-voies et une coupure des communications entre les deux unités de traitement. L'utilisation de tels réseaux pour échanger des informations entre les unités de traitement permet d'augmenter le niveau de redondance des moyens de communication entre les unités de traitement et d'assurer la sûreté de fonctionnement du système de contrôle de vol sans pour autant nécessiter la mise en place de moyens de communication supplémentaires dédiés uniquement à la communication entre les unités de traitement. Enfin l'étape de commutation permet de s'assurer, avant de passer dans l'état esclave, que l'unité de traitement n'est pas en train d'assurer le contrôle du moteur, qu'elle n'est pas capable d'assurer le contrôle du moteur à la place de l'autre unité de traitement, et que les pannes qui l'affectent ne l'empêchent pas de donner accès à ses actionneurs à l'autre unité de traitement. L'unité de traitement opposée et l'unité de traitement locale étant connectées par l'intermédiaire d'une part d'une première liaison numérique bidirectionnelle et d'autre part d'une deuxième liaison numérique bidirectionnelle et l'unité de traitement opposée transmettant une donnée de santé opposée sur chacune des liaisons,
l'étape de réception d'une donnée de santé opposée du procédé selon le premier aspect peut comprendre une étape de réception d'une première donnée de santé opposée sur la première liaison et d'une deuxième donnée de santé opposée redondante sur la deuxième liaison, une étape de vérification de la cohérence desdites première et deuxième données de santé reçues, et une étape de détermination de ladite donnée de santé opposée transmise en fonction de ladite étape de vérification.

Ceci permet de renforcer la capacité de détection par le système des altérations des données échangées entre les unités de traitement et minimise ainsi la probabilité de défaillance du système de contrôle de vol.

L'étape de détermination de la donnée de santé opposée transmise peut comprendre, lorsque lesdites première et deuxième données de santé reçues ne sont pas cohérentes, une étape de consolidation au cours de laquelle la donnée de santé opposée transmise est déterminée à partir des données reçues sur au moins deux trames successives.

Ceci permet de minimiser le risque d'erreur lors de la détermination de la donnée de santé opposée transmise lorsque les données transmises sur les deux liaisons sur une première trame sont pas cohérentes et ne permettent pas de déterminer la donnée de santé transmise de manière sûre.

Afin de s'assurer que les données reçues n'ont pas été corrompues au cours de leur transmission, l'étape de réception de donnée de santé opposée du procédé selon le premier aspect peut comprendre une étape de vérification de l'intégrité de ladite donnée de santé reçue.

L'étape de détermination d'une donnée de santé locale du procédé selon le premier aspect peut comprendre une étape de diagnostic de l'état de santé relatif au matériel (« hardware ») et au logiciel (« software ») de ladite unité de traitement locale.

Ceci permet d'obtenir une donnée de santé permettant de diagnostiquer l'ensemble des pannes pouvant affecter la capacité de l'unité de traitement locale à assurer le contrôle du moteur.

Selon une caractéristique avantageuse et non limitative, l'étape de commutation du procédé selon le premier aspect comprend :
- une étape de détermination, dans laquelle ladite unité de traitement locale détermine à partir desdites données de santé locale et opposée que son état de santé est meilleur que celui de l'unité de traitement opposée,
- une étape d'attente dans laquelle ladite unité de traitement locale attend que l'unité de traitement opposée passe dans l'état passif,
- une étape de commutation de l'unité de traitement locale dans l'état actif.

Ceci permet d'éviter que le système de contrôle de vol ne se retrouve dans une situation dans laquelle les deux unités de traitement seraient actives en même temps et risqueraient de transmettre des ordres contradictoires à leurs actionneurs.

La présente invention se rapporte selon un **deuxième aspect** à un produit programme d'ordinateur comprenant des instructions de code pour l'exécution d'un procédé de commutation selon le premier aspect lorsque ce programme est exécuté par un processeur.

La présente invention se rapporte selon un **troisième aspect** à un système de contrôle de vol d'un aéronef comprenant au moins un moteur, le système de contrôle de vol comprenant une première unité de traitement, une deuxième unité de traitement et des moyens de communication de sauvegarde, dans lequel la première unité de traitement est configurée pour commander au moins un actionneur, dit actionneur local, de sorte à contrôler le moteur de l'aéronef,
ladite première unité de traitement, dite unité de traitement locale étant configurée pour être connectée à au moins un capteur local et pour être connectée par l'intermédiaire d'au moins une liaison à la deuxième unité de traitement, dite unité de traitement opposée,
dans lequel l'unité de traitement opposée est configurée pour commander au moins un actionneur opposé et être connectée à au moins un capteur opposé,
dans lequel ladite unité de traitement locale est en outre configurée pour être connectée aux moyens de communication de sauvegarde,
dans lequel les moyens de communication de sauvegarde permettant d'assurer des échanges de données entre l'unité de traitement locale et l'unité de traitement opposée en cas de défaillances de ladite au moins une liaison les connectant, lesdits moyens de communication de sauvegarde comprenant un réseau de capteurs ou d'actionneurs et/ou un réseau sécurisé embarqué pour l'avionique, et comprenant :
- des moyens pour envoyer à l'unité de traitement opposée des données d'acquisitions relatives à l'au moins un capteur local et des données d'actionneur relatives à l'au moins un actionneur local,
- des moyens pour recevoir en provenance de l'unité de traitement opposée des données d'acquisitions relatives à l'au moins un capteur opposé et des données d'actionneur relatives à l'au moins un actionneur opposé,
- des moyens pour recevoir une donnée de santé relative à l'état de santé de l'unité de traitement opposée, dite donnée de santé opposée,
- des moyens pour déterminer une donnée de santé relative à la santé de ladite unité de traitement locale, dite donnée de santé locale,
- des moyens de commutation pour commuter ladite unité de traitement locale d'un premier état à un deuxième état, en fonction de ladite donnée de santé opposée reçue et de ladite donnée de santé locale déterminée,
lesdits états étant parmi un état actif dans lequel l'unité de traitement locale assure le contrôle du moteur de l'aéronef, un état passif dans lequel l'unité de traitement locale n'assure pas le contrôle du moteur de l'aéronef et un état esclave dans lequel l'unité de traitement locale cède à l'unité de traitement opposée la commande desdits actionneurs locaux pour le contrôle du moteur de l'aéronef,
dans lequel les moyens de commutation sont configurés pour: f
- déterminer, à partir de la donnée de santé locale, d'une donnée d'état relative à l'état de ladite unité de traitement locale et d'une donnée de statut de santé de l'unité de traitement locale relative à la capacité de l'unité de traitement locale à assurer le contrôle du moteur, et
- commuter ladite unité de traitement locale dans l'état esclave :
- lorsque la donnée d'état indique que l'unité de traitement locale est dans un état passif et,
- lorsque la donnée de statut de santé indique un statut dans lequel :
   ▪ l'unité de traitement locale est capable de communiquer avec l'unité de traitement opposée,
   ▪ l'unité de traitement locale est incapable d'assurer le contrôle du moteur,
   ▪ et l'unité de traitement locale est capable de commander les actionneurs locaux.

De tels produit programme d'ordinateur et système de contrôle de vol présentent les mêmes avantages que ceux évoqués pour le procédé selon le premier aspect.

Les deux unités de traitement peuvent être connectées par l'intermédiaire d'une part d'une première liaison numérique bidirectionnelle et d'autre part d'une deuxième liaison numérique bidirectionnelle, ladite deuxième liaison étant redondante avec la première liaison, et lesdites première et deuxième liaisons étant susceptibles d'être actives de façon concomitante.

Un tel système présente une forte résistance aux pannes grâce à la redondance de ses unités de traitement et de ses moyens de communications ainsi que par la minimisation du nombre de liaisons de communication, tout en réduisant son encombrement.

Les première et deuxième liaisons peuvent être des liaisons CCDL (« Cross Channel Data Link »).

Une telle liaison permet notamment aux unités de traitement d'échanger des informations de santé plus complexes que celles échangées par l'intermédiaire des liaisons analogiques discrètes des systèmes connus tout en limitant le volume de câblage.

Le réseau sécurisé embarqué pour l'avionique peut être par exemple un réseau Ethernet redondant du type AFDX (« Avionics Full DupleX switched ethernet ») ou µAFDX.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre schématiquement un système de contrôle de vol selon un mode de réalisation de l'invention;
- la figure 2 illustre schématiquement des moyens matériels destinés à établir deux liaisons CCDL entre deux unités de traitement d'un système de contrôle de vol selon un mode de réalisation de l'invention ;
- la figure 3 illustre schématiquement la ségrégation physique de modules CCDL de chaque unité de traitement d'un système de contrôle de vol selon un mode de réalisation de l'invention;
- la figure 4 illustre schématiquement la ségrégation des moyens matériels d'une unité de traitement destinés à établir deux liaisons CCDL selon un mode de réalisation de l'invention ;
- la figure 5 représente le graphe des états des unités de traitement du système de contrôle de vol selon un mode de réalisation de l'invention.

### DESCRIPTION DETAILLEE

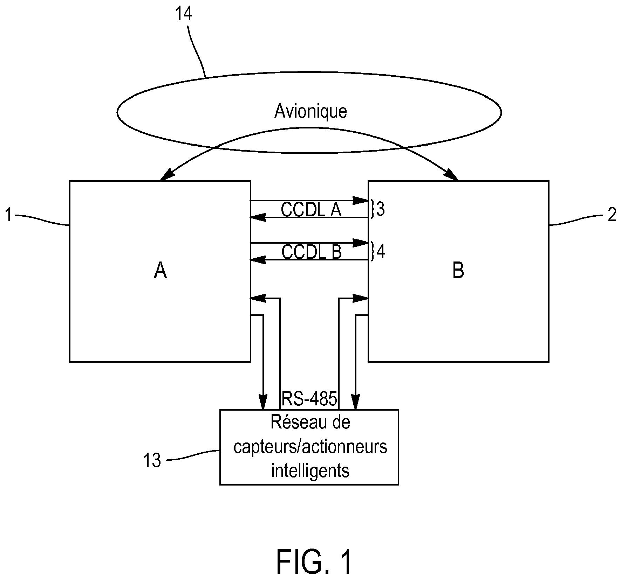

Un mode de réalisation de l'invention, concerne un procédé de commutation mis en oeuvre par une première unité de traitement 1, dite unité de traitement locale, d'un système de contrôle de vol, représenté en **figure 1****,** d'un aéronef comprenant au moins un moteur.

Le système de contrôle de vol comporte également une deuxième unité de traitement 2, dite unité de traitement opposée. L'unité de traitement locale est susceptible d'être connectée à au moins un capteur local et d'être connectée par l'intermédiaire d'au moins une liaison 3, 4 à l'unité de traitement opposée, elle-même connectée à au moins un capteur opposé. Ces deux unités de traitement sont redondantes et peuvent chacune exécuter les fonctions de commande et de régulation du moteur de l'aéronef. Pour cela chaque unité de traitement est configurée pour commander au moins un actionneur, de sorte à contrôler le moteur de l'aéronef. Les actionneurs pilotables par l'unité de traitement locale 1 sont appelés actionneurs locaux. Les actionneurs pilotables par l'unité de traitement opposée sont appelés actionneurs opposés. Le système tel qu'illustré en **figure 1** constitue ainsi une architecture bi-voies comprenant une voie A et une voie B.

Les unités de traitement 1 et 2 peuvent être des processeurs d'un même système informatique multiprocesseurs comportant plusieurs processeurs. Afin de renforcer la résistance du système de contrôle de vol aux agressions externes et d'éviter qu'un unique évènement localisé ne puisse mettre hors service les deux unités de traitements 1 et 2, les deux voies peuvent être installées à distance l'une de l'autre dans des boitiers séparés. Dans une telle configuration, les unités de traitement ne sont pas des coeurs d'exécution intégrés au sein d'un unique processeur.

Le système comprend également des moyens de communication permettant de connecter les deux unités de traitement pour permettre l'échange de données essentielles au bon fonctionnement de chacune des unités de traitement telles que des informations sur l'état de santé de l'unité de traitement opposée.

Dans une variante de réalisation, ces moyens de communication sont configurés pour établir une première liaison numérique bidirectionnelle 3 et une deuxième liaison numérique bidirectionnelle 4 entre la première unité de traitement 1 et la deuxième unité de traitement 2. Un tel système ne comporte aucun lien discret entre les deux unités de traitement, ce qui permet de limiter la complexité de son câblage et la probabilité qu'un des liens de communication tombe en panne.

La deuxième liaison 4 est redondante avec la première liaison 3 afin d'assurer la communication entre les deux unités de traitement en cas de défaillance de la première liaison 3, et réciproquement. Une telle redondance garantit, du point de vue de l'échange d'informations entre les deux unités de traitement, un bon niveau de sûreté.

De plus lesdites première et deuxième liaisons sont susceptibles d'être actives de façon concomitante. Ainsi, contrairement aux systèmes dans lesquels la liaison redondante n'est utilisée qu'en cas de défaillance de la première liaison, le système de contrôle de vol peut utiliser la première liaison 3 et la deuxième liaison 4 en même temps en fonctionnement normal, c'est-à-dire en l'absence de défaillance d'une des deux liaisons, et peut mettre à profit l'utilisation concomitante de ces deux liaisons pour vérifier l'absence de corruption des données échangées entre les deux unités de traitement.

Les première et deuxième unités de traitement 1 et 2 peuvent utiliser un protocole pour communiquer entre elles par l'intermédiaire des deux liaisons 3 et 4, par exemple parmi les protocoles Ethernet IEEE 802.3, HDLC, SDLC, ou tout autre protocole disposant d'une fonction de détection ou correction d'erreur. Une liaison Ethernet permet notamment d'assurer de hautes performances, une grande robustesse environnementale, notamment vis-à-vis de la résistance à la foudre et de la Compatibilité Electro-Magnétique (« CEM ») et une haute robustesse fonctionnelle grâce à la mise en oeuvre de mécanismes de contrôle d'intégrité de données et de contrôle de flux. De plus le protocole Ethernet est un standard industriel cohérent avec les technologies de communication avionique, tel que AFDX (« Avionics Full DupleX switched ethernet ») ou µAFDX, et de maintenance.

Les première et deuxième liaisons peuvent être des liaisons CCDL (« Cross Channel Data Link »). Une telle liaison permet de synchroniser chaque applicatif avec une précision inférieure à cent microsecondes. Une telle liaison permet également, au lieu d'échanger des discrets comme dans les systèmes connus, d'échanger des informations de santé construites par le matériel (« hardware ») ou le logiciel (« software »), des informations utiles au système (acquisition, statuts,...) et des données fonctionnelles de système d'exploitation (OS) ou de système d'application (AS).

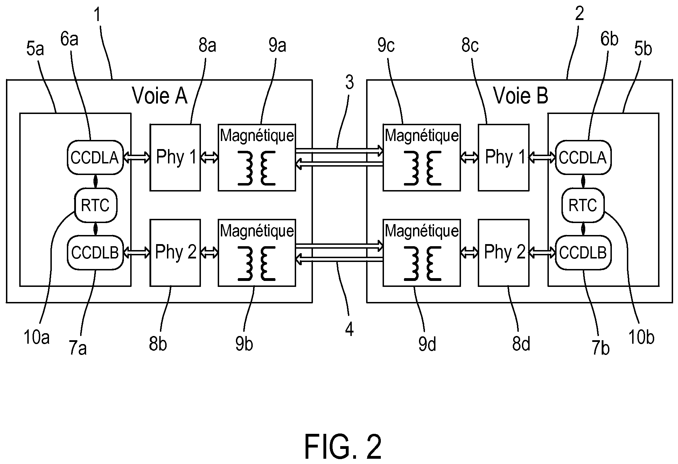

De telles liaisons CCDL entre les deux unités de traitement A et B sont représentées en **figure 2****.** Chaque unité de traitement 1,2 comprend un système 5a, 5b, comportant un premier module CCDL (CCDLA) 6a, 6b pour établir la première liaison CCDL 3 et un deuxième module CCDL (CCDLB) 7a, 7b pour établir la deuxième liaison CCDL 4. Un tel système peut se présenter sous la forme d'un système sur puce (SoC, « system on a chip ») ou être constitué d'un microprocesseur et de périphériques implémentés dans des boitiers séparés ou dans une carte FPGA. Chaque module CCDL est relié à l'interface entrée/sortie de son boitier par une couche physique. Une telle couche peut par exemple comprendre une interface matérielle Phy 8a, 8b, 8c, 8d et un transformateur 9a, 9b, 9c, 9d tel que représenté en figure 2.

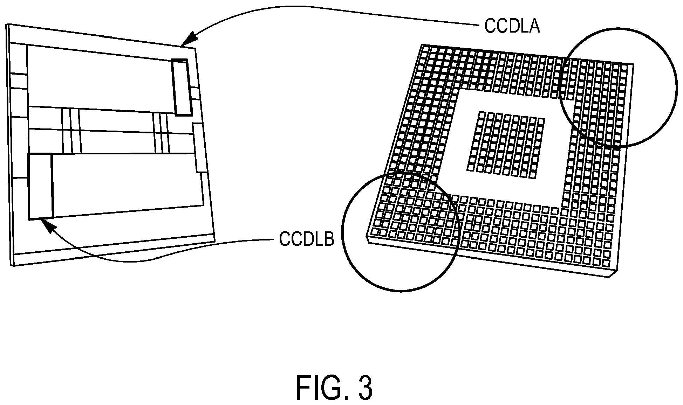

Comme illustré en **figure 3****,** les modules CCDL de chaque unité de traitement peuvent être ségrégés physiquement en étant disposés sur le système 5a, 5b en des localisations distinctes et éloignées les unes des autres, par exemple en les disposant chacun à un coin d'un système sur puce. Ceci permet de réduire la probabilité de panne commune en cas d'altération de type SEU (« Single Event Upset ») ou MBU (« Multiple Bit Upset »).

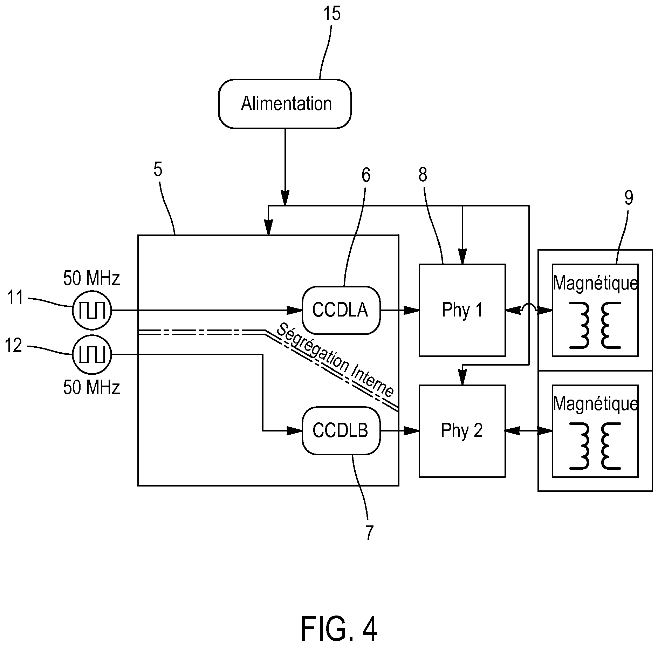

Selon une première variante chaque système 5a, 5b est alimenté par une alimentation séparée. Selon une deuxième variante le système comprend une alimentation 15 (« power supply ») commune à l'ensemble du système sur puce. Chaque système sur puce peut être alimenté par deux signaux d'horloges distincts 11 et 12, comme représenté en **figure 4****.** Ainsi, bien qu'ils ne soient pas alimentés de manière indépendante, les modules CCDL de chaque unité de traitement peuvent être alimentés par des horloges indépendantes, ce qui renforce la résistance aux pannes du système sur puce en empêchant qu'une panne d'horloge d'un des modules CCDL puisse affecter l'autre module CCDL.

Les modules CCDL de chaque unité de traitement peuvent être synchronisés grâce à un mécanisme d'horloge temps réel local (HTR ou RTC « Real time clock ») 10a, 10b tel que représenté en figure 2 et à un mécanisme de synchronisation tel qu'un mécanisme à fenêtre de synchronisation. Ainsi en cas de perte de la synchronisation, chaque unité de traitement fonctionne grâce à son horloge locale puis se synchronise à nouveau à la réception d'un signal valide. Le mécanisme d'horloge local est programmable par l'applicatif et sa programmation est protégée contre les altérations de type SEU (« Single Event Upset ») ou MBU (« Multiple Bit Upset »). Les liaisons CCDL peuvent néanmoins continuer à fonctionner même en l'absence de synchronisation ou en cas de perte d'une horloge.

Le système peut en outre comprendre des moyens de communication de sauvegarde permettant d'assurer des échanges de données entre les première et deuxième unités de traitement et utilisés uniquement en cas de défaillances des première et deuxième liaisons, pour éviter une coupure des communications entre les unités de traitement.

Dans un premier mode de réalisation illustré en **figure 1****,** ces moyens de communications de sauvegarde peuvent comprendre un réseau de capteurs ou d'actionneurs 13. Un tel réseau de capteurs ou d'actionneurs peut à titre d'exemple être un réseau de capteurs ou actionneurs intelligents (« smart-sensor, smart-actuator »). Chaque unité de traitement peut alors être connectée à ce réseau 13 par l'intermédiaire d'un bus du type RS-485 permettant de transmettre des informations non plus de manière analogique mais numérique.

Dans un second mode de réalisation illustré en **figure 1****,** ces moyens de communication de sauvegarde comprennent un réseau sécurisé embarqué pour l'avionique 14. Un tel réseau sécurisé embarqué peut à titre d'exemple être un réseau Ethernet redondant tel qu'AFDX (« Avionics Full DupleX switched ethernet ») ou µAFDX. Un tel réseau fournit des moyens de partage des ressources, de ségrégation des flux ainsi que le déterminisme et la disponibilité requise pour les certifications aéronautiques.

Les signaux numériques transmis entre les unités de traitement pouvant être sensibles à des perturbations, des mécanismes de contrôle d'intégrité et de contrôle de cohérence des données transmises entre les deux unités de traitement distantes peuvent être mis en place.

Ainsi chaque unité de traitement peut comprendre des moyens pour vérifier l'intégrité des données reçues.

Afin de vérifier l'intégrité des données reçues, les différents champs de chaque trame reçue peuvent être vérifiés, notamment dans le cas d'une liaison Ethernet les champs relatifs à l'adresse de destination, à l'adresse source, au type et à la longueur de la trame, aux données MAC et aux données de bourrage. Une trame peut être considérée comme non valide si la longueur de cette trame n'est pas cohérente avec la longueur spécifiée dans le champ longueur de la trame ou si les octets ne sont pas entiers. Une trame peut également être considérée comme non valide si le contrôle de redondance (CRC, « Cyclic Redundancy Check ») calculé à la réception de la trame ne correspond pas au CRC reçu en raison d'erreurs dues par exemple, aux interférences lors de la transmission.

De plus, lorsque l'unité de traitement locale et l'unité de traitement opposée sont connectées par l'intermédiaire de deux liaisons bidirectionnelles, chaque unité de traitement peut comprendre des moyens pour vérifier suite à la transmission d'une donnée à la fois sur la première liaison et sur la deuxième liaison, la cohérence des données reçues sur les deux liaisons qui doivent véhiculer les mêmes informations en l'absence de panne ou de corruption des trames transmises, et pour déterminer la donnée réellement transmise. Lorsque les données reçues sur les deux liaisons ne sont pas cohérentes, l'unité de traitement peut mettre en oeuvre une étape de consolidation au cours de laquelle la donnée réellement transmise est déterminée à partir des données reçues sur au moins deux trames successives, éventuellement sur trois trames. Une telle consolidation peut également être réalisée en allongeant la période de temps qui sépare la réception de deux paquets de données Ethernet successifs, par exemple en fixant la longueur de cette période de temps à une durée plus grande que la durée d'une perturbation électomagnétique. Ceci peut être mis en oeuvre en ajoutant un paramètre (« Inter Frame Gap ») fixant une telle période entre les paquets émis. Une telle mise en oeuvre peut permettre par exemple d'éviter la corruption de deux paquets Ethernet transmis de façon redondée.

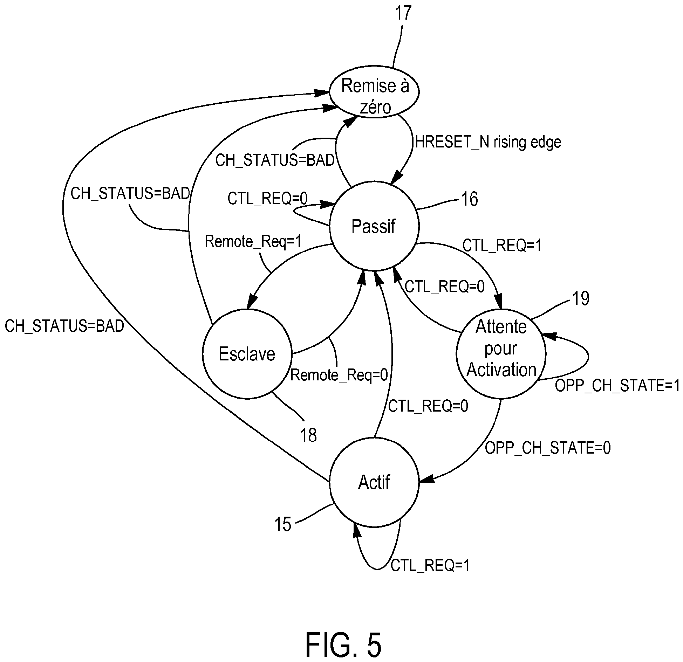

Chacune des unités de traitement du système de contrôle de vol peut se trouver dans un état parmi les états suivants, tel que représenté dans le graphe d'état en **figure 5** :
• un état actif (« ACTIVE ») 15 dans lequel l'unité de traitement assure le contrôle du moteur de l'aéronef,
▪ un état passif (« PASSIVE ») 16 dans lequel l'unité de traitement n'assure pas le contrôle du moteur de l'aéronef mais exécute d'autres fonctions, par exemple de diagnostic, et peut éventuellement communiquer avec l'autre unité de traitement du système de contrôle,
▪ un état de remise à zéro (« RESET ») 17 dans lequel l'unité de traitement est inactive et n'exécute aucune fonction,
▪ un état esclave (« SLAVE ») 18 dans lequel l'unité de traitement cède à l'autre unité de traitement la commande de ses actionneurs pour le contrôle du moteur de l'aéronef.
Afin que chaque unité de traitement dispose d'une image complète du système global, y compris des actionneurs et capteurs connectés à l'unité de traitement opposée, pour pouvoir assurer correctement le contrôle du moteur malgré la défaillance d'un actionneur local, le procédé de commutation mis en oeuvre par une unité de traitement locale comprend des étapes de :
- envoi à l'unité de traitement opposée de données d'acquisitions relatives à l'au moins un capteur local et de données d'actionneur relatives à l'au moins un actionneur local,
- réception en provenance de l'unité de traitement opposée de données d'acquisitions relatives à l'au moins un capteur opposé et de données d'actionneur relatives à l'au moins un actionneur opposé.
De telles données d'acquisition relatives à un capteur peuvent à titre d'exemple dans le cas de capteurs de températures comprendre la température mesurée par le capteur.

De plus, afin de permettre à l'unité de traitement locale 1 de changer d'état parmi les quatre états décrits ci-dessus, le procédé de commutation comprend des étapes de :
- réception d'une donnée de santé, tel qu'un statut, relative à l'état de santé de l'unité de traitement opposée 2, dite donnée de santé opposée,
- détermination d'une donnée de santé relative à la santé de ladite unité de traitement locale 1, dite donnée de santé locale,
- commutation de ladite unité de traitement locale 1 d'un premier état à un deuxième état, en fonction de ladite donnée de santé opposée reçue et de ladite donnée de santé locale déterminée, lesdits premier et deuxième états étant parmi les états actif, passif, remise à zéro et esclave décrits ci-dessus.

Lesdites étapes d'envoi, de réception de données d'acquisition et de réception d'une donnée de santé sont mises en oeuvre par l'intermédiaire des liaisons 3,4 connectant les deux unités de traitement ou par l'intermédiaire des moyens de communication de sauvegarde 13, 14 en cas de défaillance des liaisons 3,4.

La donnée de santé opposée reçue pouvant être sujette à des perturbations, l'étape de réception d'une donnée de santé opposée peut comprendre une étape de vérification de l'intégrité de la donnée reçue.

Par ailleurs des mécanismes de vérification de cohérence peuvent également être mis en oeuvre, la donnée de santé opposée pouvant être transmise de façon redondante sur les deux liaisons bidirectionnelles. L'étape de réception d'une donnée de santé opposée comprend alors une étape de réception d'une première donnée de santé opposée sur la première liaison et d'une deuxième donnée de santé opposée redondante sur la deuxième liaison, une étape de vérification de la cohérence desdites première et deuxième données de santé reçues, et une étape de détermination de ladite donnée de santé opposée transmise en fonction de ladite étape de vérification. En variante, la première donnée de santé opposée reçue sur la première liaison et la deuxième donnée de santé opposée reçue sur la deuxième liaison peuvent faire l'objet d'une vérification d'intégrité avant la vérification de leur cohérence.

En cas d'incohérence des données reçues sur les deux liaisons, l'unité de traitement locale peut ignorer cette donnée de santé et attendre la transmission d'une nouvelle donnée de santé opposée. En cas de réception de données incohérentes sur les deux liaisons lors de deux transmissions successives ou plus, l'unité de traitement locale peut retenir de manière conservative comme donnée de santé opposée la donnée reçue indiquant le plus mauvais état de santé de l'unité de traitement opposée si les données reçues lors de la première transmission sont identiques à celles reçues lors des transmissions ultérieures. Sinon, la dernière donnée de santé reçue de manière cohérente est conservée tant qu'aucune nouvelle donnée de santé n'a été reçue de manière cohérente.

Pour déterminer une donnée de santé locale ou opposée, l'unité de traitement concernée réalise un diagnostic de l'état de santé relatif à ses éléments matériels et logiciels. Un tel diagnostic peut être établi à partir d'informations obtenues de différents moyens de surveillance (« monitoring ») ou de plusieurs registres. A titre d'exemple, un registre permet d'obtenir l'état de santé du matériel de l'unité de traitement et un autre registre permet d'obtenir l'état de santé du logiciel de l'unité de traitement.

Les données de santé déterminées en local ou transmises par l'unité de traitement opposée sont ainsi des données permettant la sélection d'une voie et l'établissement d'un diagnostic système complet. Elles peuvent notamment être des données de diagnostics CCDL, des données de statuts du système d'exploitation ou des applicatifs, des données de diagnostics du matériel, notamment de capteurs ou d'actionneurs, des données de diagnostics fonctionnels réalisés par le logiciel, ....

A partir d'une donnée de santé locale ou opposée, l'unité de traitement locale peut déterminer une donnée d'état indiquant l'état, actif, passif, esclave ou remise à zéro, dans lequel se trouve l'unité de traitement locale ou opposée correspondante, et une donnée de statut de santé relative à la capacité de l'unité de traitement locale ou opposée à assurer le contrôle du moteur.

Selon un mode de réalisation, chaque unité de traitement peut présenter un statut de santé parmi les quatre statuts suivants :
▪ un statut « GOOD » dans lequel l'unité de traitement ne présente aucune panne,
▪ un statut « ACCEPTABLE » dans lequel l'unité de traitement présente certaines pannes qui ne l'empêcheraient cependant pas d'assurer correctement le contrôle du moteur, par exemple la casse d'un transformateur d'une liaison CCDL ou la perte du signal d'horloge d'une seule liaison CCDL,
▪ Un statut « SLAVE » dans lequel l'unité de traitement présente des pannes trop graves pour lui permettre d'assurer correctement le contrôle du moteur, par exemple une panne processeur, mais ne présente pas de pannes matérielles qui l'empêcheraient de piloter ses actionneurs ou de communiquer avec l'unité de traitement opposée,
▪ Un statut « BAD » dans lequel l'unité de traitement est incapable d'assurer correctement le contrôle du moteur et présente au moins une panne matérielle empêchant l'unité de traitement de piloter ses actionneurs, par exemple une panne d'alimentation ou d'horloge affectant l'ensemble de l'unité de traitement ou une panne des deux liaisons CCDL.

L'unité de traitement locale exécute à intervalle de temps régulier les étapes décrites ci-dessus de réception d'une donnée de santé opposée et de détermination d'une donnée de santé locale. Afin de déterminer si elle doit changer d'état, l'unité de traitement locale détermine, à partir de la donnée de santé locale, une donnée d'état locale indiquant son état et une donnée de statut locale indiquant son statut de santé. De même l'unité de traitement locale détermine, à partir de la donnée de santé opposée, une donnée d'état opposée indiquant l'état de l'unité de traitement opposée, et une donnée de statut opposée indiquant le statut de l'unité de traitement opposée.

L'unité de traitement locale réalise ensuite une comparaison de son état de santé, indiqué par la donnée de statut locale, avec celui de l'unité de traitement opposée, indiqué par la donnée de statut opposée.

Si l'unité de traitement locale est dans un état actif et que son état de santé reste meilleur que celui de l'autre unité de traitement (CTL_REQ=1), l'unité de traitement reste dans un état actif et continue à assurer le contrôle du moteur.

A titre d'exemple, l'état de santé de l'unité de traitement locale est meilleur que celui de l'unité de traitement opposée lorsque :
- l'unité de traitement locale présente le statut GOOD et l'unité de traitement opposée présente un statut parmi les statuts ACCEPTABLE, SLAVE et BAD,
- l'unité de traitement locale présente le statut ACCEPTABLE et l'unité de traitement opposée présente un statut parmi les statuts SLAVE et BAD.

Si l'unité de traitement locale est dans un état actif et que son état de santé devient moins bon que celui de l'autre unité de traitement (CTL_REQ=0), l'unité de traitement locale commute dans un état passif et cesse d'assurer le contrôle du moteur qui est alors assuré par l'unité de traitement opposée.

A titre d'exemple, l'état de santé de l'unité de traitement locale est moins bon que celui de l'unité de traitement opposée lorsque :
- l'unité de traitement locale présente le statut ACCEPTABLE et l'unité de traitement opposée présente le statut GOOD, ou
- l'unité de traitement locale présente le statut SLAVE et l'unité de traitement opposée présente un statut parmi les statuts GOOD et ACCEPTABLE, ou
- l'unité de traitement locale présente le statut BAD et l'unité de traitement opposée présente un statut parmi les statuts GOOD et ACCEPTABLE.

Si l'unité de traitement locale est dans un état passif et que son état de santé reste moins bon que celui de l'unité de traitement opposée (CTL_REQ=0), l'unité de traitement reste dans un état passif.

Si l'unité de traitement locale est dans un état passif et que son état de santé devient meilleur que celui de l'unité de traitement opposée (CTL_REQ=1), l'unité de traitement locale commute dans un état actif afin d'assurer le contrôle du moteur à la place de l'unité de traitement opposée. La commutation d'un état passif à un état actif peut passer par un état d'attente 19 dans laquelle l'unité de traitement locale attend que l'unité de traitement opposée passe dans l'état passif (OPP_CH_STATE=0) avant de passer dans l'état actif et de prendre la main sur le contrôle du moteur. Ceci permet d'éviter que le système de contrôle de vol ne se retrouve dans une situation dans laquelle les deux unités de traitement seraient actives en même temps et risqueraient de transmettre des ordres contradictoires à leurs actionneurs. L'unité de traitement peut rester dans un tel état d'attente 19 tant que l'unité de traitement opposée est active (OPP_CH_STATE=1). Depuis cet état, l'unité de traitement locale peut même retourner dans un état passif si l'état de santé de l'unité de traitement opposée est redevenu meilleur que l'état de santé de l'unité de traitement locale (CTL_REQ=0) avant que celle-ci ne soit passée en état actif.

Si l'unité de traitement locale est dans un état passif et que la donnée de statut locale indique que l'unité de traitement présente un statut de santé « SLAVE » (Remote Req=1), l'unité de traitement locale peut commuter dans l'état esclave décrit ci-dessus. Selon une variante, la commutation dans l'état esclave est également conditionnée à la réception d'un signal de demande d'accès aux actionneurs de l'unité de traitement locale en provenance de l'unité de traitement opposée. Depuis l'état esclave, l'unité de traitement peut retourner à l'état passif lorsque la donnée de statut local n'indique plus que l'unité de traitement présente un statut de santé « SLAVE » (Remote Req=0)

Si la donnée de statut local indique un statut de santé « BAD », l'unité de traitement locale commute en état de remise à zéro quel que soit son état courant. Une fois la remise à zéro effectuée avec succès (HRESET_N rising edge), l'unité de traitement peut repasser dans l'état passif.

Dans le cas où l'unité de traitement locale et l'unité de traitement opposée présentent le même statut de santé, GOOD ou ACCEPTABLE, chaque unité de traitement peut selon une première variante rester dans son état courant, actif ou passif. Selon une deuxième variante, il est possible de prévoir de confier le contrôle du moteur à une unité de traitement par défaut, par exemple la première unité de traitement 1, auquel cas les deux unités de traitement restent dans leur état courant si l'unité de traitement par défaut est déjà dans un état actif, ou bien passent d'état passif à actif et inversement si l'unité de traitement par défaut était précédemment dans un état passif.

Une unité de traitement peut passer de statut ACCEPTABLE au statut GOOD si elle recouvre les fonctions qu'elle avait précédemment perdues mais une unité de traitement présentant un statut SLAVE ou BAD ne peut pas repasser dans un statut ACCEPTABLE ou GOOD, à moins d'une remise à zéro.

Ainsi la voie passive du système de contrôle peut passer dans un état lui permettant de mettre ses actionneurs à disposition de la voie active, qui est dans un meilleur état de santé, pour que le système de contrôle de vol puisse continuer à assurer le contrôle du moteur de l'aéronef malgré une panne affectant la capacité de la voie active à piloter ses propres actionneurs.

## Revendications

1. Procédé de commutation mis en oeuvre par une première unité de traitement (1,2) d'un système de contrôle de vol d'un aéronef comprenant au moins un moteur,
ladite première unité de traitement (1,2) étant configurée pour commander au moins un premier actionneur, de sorte à contrôler le moteur de l'aéronef, et étant configurée pour être connectée à au moins un premier capteur et pour être connectée par l'intermédiaire d'au moins une liaison (3,4) à une deuxième unité de traitement (2,1), configurée pour commander au moins un deuxième actionneur et être connectée à au moins un deuxième capteur, ladite première unité de traitement (1,2) étant en outre configurée pour être connectée à des moyens de communication de sauvegarde (13,14) permettant d'assurer des échanges de données entre la première unité de traitement (1,2) et la deuxième unité de traitement (2,1) en cas de défaillances de ladite au moins une liaison les connectant (3,4), lesdits moyens de communication de sauvegarde comprenant un réseau de capteurs ou d'actionneurs (13) et/ou un réseau sécurisé embarqué pour l'avionique (14),
ledit procédé comprenant des étapes de :
- envoi à la deuxième unité de traitement de données d'acquisitions relatives à l'au moins un premier capteur et de données d'actionneur relatives à l'au moins un premier actionneur,
- réception en provenance de la deuxième unité de traitement de données d'acquisitions relatives à l'au moins un deuxième capteur et de données d'actionneur relatives à l'au moins un deuxième actionneur,
- réception d'une donnée de santé relative à l'état de santé de la deuxième unité de traitement (2,1), dite deuxième donnée de santé,
- détermination d'une donnée de santé relative à la santé de ladite première unité de traitement (1,2), dite première donnée de santé,
- commutation de ladite première unité de traitement (1,2) d'un premier état à un deuxième état, en fonction de ladite deuxième donnée de santé reçue et de ladite première donnée de santé déterminée,
lesdites étapes d'envoi, de réception de données d'acquisition et de réception d'une donnée de santé étant mises en oeuvre par l'intermédiaire de ladite au moins une liaison ou desdits moyens de communication de sauvegarde, et lesdits états étant parmi un état actif (15) dans lequel la première unité de traitement (1,2) assure le contrôle du moteur de l'aéronef, un état passif (16) dans lequel la première unité de traitement (1,2) n'assure pas le contrôle du moteur de l'aéronef et un état esclave (18) dans lequel la première unité de traitement (1,2) cède à la deuxième unité de traitement (2,1) la commande desdits premiers actionneurs pour le contrôle du moteur de l'aéronef, dans lequel l'étape de commutation comprend :
- une étape de détermination, à partir de la première donnée de santé, d'une donnée d'état relative à l'état de ladite première unité de traitement (1,2) et d'une donnée de statut de santé de la première unité de traitement relative à la capacité de la première unité de traitement à assurer le contrôle du moteur, et
- une étape de commutation de la première unité de traitement (1,2) dans l'état esclave (18) :
- lorsque la donnée d'état indique que la première unité de traitement (1) est dans un état passif (16) et,
- lorsque la donnée de statut de santé indique un statut dans lequel :
▪ La première unité de traitement est capable de communiquer avec la deuxième unité de traitement,
▪ La première unité de traitement (1,2) est incapable d'assurer le contrôle du moteur,
▪ et la première unité de traitement (1,2) est capable de commander les premiers actionneurs.

2. Procédé selon la revendication 1, dans lequel
La deuxième unité de traitement (2,1) et la première unité de traitement (1,2) étant connectées par l'intermédiaire d'une part d'une première liaison numérique bidirectionnelle (3) et d'autre part d'une deuxième liaison numérique bidirectionnelle (4),
et la deuxième unité de traitement (2,1) transmettant une deuxième donnée de santé sur chacune des liaisons (3,4),
l'étape de réception d'une deuxième donnée de santé comprend une étape de réception d'une troisième donnée de santé sur la première liaison (3) et d'une quatrième donnée de santé redondante sur la deuxième liaison (4), une étape de vérification de la cohérence desdites troisième et quatrième données de santé reçues, et une étape de détermination de ladite deuxième donnée de santé transmise en fonction de ladite étape de vérification.

3. Procédé selon la revendication précédente, dans lequel l'étape de détermination de la deuxième donnée de santé transmise comprend, lorsque lesdites troisième et quatrième données de santé reçues ne sont pas cohérentes, une étape de consolidation au cours de laquelle la deuxième donnée de santé transmise est déterminée à partir des données reçues sur au moins deux trames successives.

4. Procédé selon l'une quelconque des revendications précédentes, dans lequel l'étape de réception d'une donnée de santé comprend une étape de vérification de l'intégrité de ladite donnée de santé reçue.

5. Procédé selon l'une des revendications précédentes, dans lequel l'étape de détermination d'une première donnée de santé comprend une étape de diagnostic de l'état de santé relatif au matériel, « hardware », et au logiciel, « software », de ladite première unité de traitement (1,2).

6. Procédé selon l'une des revendications précédentes, dans lequel l'étape de commutation comprend :
- une étape de détermination, dans laquelle la première unité de traitement (1,2) détermine à partir desdites première et deuxième données de santé que son état de santé est meilleur que celui de la deuxième unité de traitement (2,1),
- une étape d'attente dans laquelle ladite première unité de traitement (1,2) attend que la deuxième unité de traitement (2,1) passe dans l'état passif (16),
- une étape de commutation de la première unité de traitement (1,2) dans l'état actif (16).

7. Produit programme d'ordinateur comprenant des instructions de code pour l'exécution d'un procédé de commutation selon l'une quelconque des revendications précédentes lorsque ce programme est exécuté par un processeur.

8. Système de contrôle de vol d'un aéronef comprenant au moins un moteur, le système de contrôle de vol comprenant une première unité de traitement, une deuxième unité de traitement, et des moyens de communication de sauvegarde,
dans lequel la première unité de traitement est configurée pour commander au moins un premier actionneur, de sorte à contrôler le moteur de l'aéronef, pour être connectée à au moins un premier capteur, et pour être connectée par l'intermédiaire d'au moins une liaison (3,4) à la deuxième unité de traitement (2,1),
dans lequel la deuxième unité de traitement est configurée pour commander au moins un deuxième actionneur et être connectée à au moins un deuxième capteur,
dans lequel ladite première unité de traitement (1,2) est en outre configurée pour être connectée aux moyens de communication de sauvegarde, dans lequel les moyens de communication de sauvegarde (13,14) permettant d'assurer des échanges de données entre la première unité de traitement (1,2) et la deuxième unité de traitement (2,1) en cas de défaillances de ladite au moins une liaison les connectant (3,4), lesdits moyens de communication de sauvegarde comprenant un réseau de capteurs ou d'actionneurs (13) et/ou un réseau sécurisé embarqué pour l'avionique (14),
et comprenant :
- des moyens pour envoyer à la deuxième unité de traitement des données d'acquisitions relatives à l'au moins un premier capteur et des données d'actionneur relatives à l'au moins un premier actionneur,
- des moyens pour recevoir en provenance de la deuxième unité de traitement des données d'acquisitions relatives à l'au moins un deuxième capteur et des données d'actionneur relatives à l'au moins un deuxième actionneur,
- des moyens pour recevoir une donnée de santé relative à l'état de santé de la deuxième unité de traitement (2,1), dite deuxième donnée de santé,
- des moyens pour déterminer une donnée de santé relative à la santé de ladite première unité de traitement (1,2), dite première donnée de santé,
- des moyens de commutation pour commuter ladite première unité de traitement (1,2) d'un premier état à un deuxième état, en fonction de ladite deuxième donnée de santé reçue et de ladite première donnée de santé déterminée,
lesdits états étant parmi un état actif (15) dans lequel la première unité de traitement (1,2) assure le contrôle du moteur de l'aéronef, un état passif (16) dans lequel la première unité de traitement (1,2) n'assure pas le contrôle du moteur de l'aéronef et un état esclave (18) dans lequel la première unité de traitement (1,2) cède à la deuxième unité de traitement (2,1) la commande desdits premiers actionneurs pour le contrôle du moteur de l'aéronef,
dans lequel les moyens de commutation sont configurés pour :
- déterminer, à partir de la première donnée de santé, d'une donnée d'état relative à l'état de ladite première unité de traitement (1,2) et d'une donnée de statut de santé de la première unité de traitement relative à la capacité de la première unité de traitement à assurer le contrôle du moteur, et
- commuter la première unité de traitement (1,2) dans l'état esclave (18) :
- lorsque la donnée d'état indique que la première unité de traitement (1) est dans un état passif (16) et,
- lorsque la donnée de statut de santé indique un statut dans lequel :
▪ La première unité de traitement est capable de communiquer avec la deuxième unité de traitement,
▪ La première unité de traitement (1,2) est incapable d'assurer le contrôle du moteur,
▪ et la première unité de traitement (1,2) est capable de commander les premiers actionneurs.

9. Système de contrôle de vol selon la revendication précédente, dans lequel les deux unités de traitement (1,2) sont connectées par l'intermédiaire d'une part d'une première liaison numérique bidirectionnelle (3) et d'autre part d'une deuxième liaison numérique bidirectionnelle (4), ladite deuxième liaison (4) étant redondante avec la première liaison (3), et lesdites première et deuxième liaisons (3,4) étant susceptibles d'être actives de façon concomitante.

10. Système de contrôle de vol selon la revendication 9, dans lequel les première et deuxième liaisons (3,4) sont des liaisons CCDL « Cross Channel Data Link ».

11. Système de contrôle de vol selon la revendication 8, dans lequel le réseau sécurisé embarqué (14) est un réseau Ethernet redondant du type AFDX « Avionics Full DupleX switched ethernet » ou µAFDX.

## Patentansprüche

1. Umschaltverfahren, welches von einer ersten Verarbeitungseinheit (1, 2) eines Flugsteuerungssystems eines mindestens einen Motor umfassenden Flugzeugs umgesetzt wird,
wobei die erste Verarbeitungseinheit (1, 2) dafür konfiguriert ist, mindestens einen ersten Aktor anzusteuern, um den Motor des Flugzeugs zu steuern, und dafür konfiguriert ist, mit mindestens einem ersten Sensor verbunden zu werden, und mittels mindestens einer Verbindung (3, 4) mit einer zweiten Verarbeitungseinheit (2, 1) verbunden zu werden, welche dafür konfiguriert ist, mindestens einen zweiten Aktor anzusteuern und mit mindestens einem zweiten Sensor verbunden zu werden, wobei die erste Verarbeitungseinheit (1, 2) weiter dafür konfiguriert ist, mit Sicherheits-Kommunikationsmitteln (13, 14) verbunden zu werden, welche es ermöglichen, im Falle von Versagen der mindestens einen sie verbindenden Verbindung (3, 4) Datenaustausche zwischen der ersten Verarbeitungseinheit (1, 2) und der zweiten Verarbeitungseinheit (2, 1) sicherzustellen, wobei die Sicherheits-Kommunikationsmittel ein Sensoren- oder Aktoren-Netzwerk (13) und/oder ein gesichertes integriertes Netzwerk für die Avionik (14) umfassen,
wobei das Verfahren Schritte umfasst des:
- Sendens von Erfassungsdaten bezüglich des mindestens einen ersten Sensors, und von Aktorendaten bezüglich des mindestens einen ersten Aktors an die zweite Verarbeitungseinheit,
- Empfangens, von der zweiten Verarbeitungseinheit her kommend, von Erfassungsdaten bezüglich des mindestens einen zweiten Sensors, und von Aktorendaten bezüglich des mindestens einen zweiten Aktors,
- Empfangens von Funktionsfähigkeitsdaten bezüglich des Funktionsfähigkeitszustands der zweiten Verarbeitungseinheit (2, 1), zweite Funktionsfähigkeitsdaten genannt,
- Ermittelns von Funktionsfähigkeitsdaten bezüglich der Funktionsfähigkeit der ersten Verarbeitungseinheit (1, 2), erste Funktionsfähigkeitsdaten genannt,
- Umschaltens der ersten Verarbeitungseinheit (1, 2) abhängig von den empfangenen zweiten Funktionsfähigkeitsdaten und den ermittelten ersten Funktionsfähigkeitsdaten, von einem ersten Zustand in einem zweiten Zustand,
wobei die Schritte des Sendens, des Empfangens von Erfassungsdaten und des Empfangens von Funktionsfähigkeitsdaten mittels der mindestens einen Verbindung oder der Sicherheits-Kommunikationsmittel umgesetzt werden, und sich die Zustände unter einem aktiven Zustand (15), in dem die erste Verarbeitungseinheit (1, 2) die Steuerung des Motors des Flugzeugs sicherstellt, einem passiven Zustand (16), in dem die erste Verarbeitungseinheit (1, 2) die Steuerung des Motors des Flugzeugs nicht sicherstellt, und einem Slave-Zustand (18) befinden, in dem die erste Verarbeitungseinheit (1, 2) die Ansteuerung der ersten Aktoren für die Steuerung des Motors des Flugzeugs an die zweite Verarbeitungseinheit (2, 1) abtritt, wobei der Schritt des Umschaltens umfasst:
- einen Schritt des Ermittelns, anhand der ersten Funktionsfähigkeitsdaten, von Zustandsdaten bezüglich des Zustands der ersten Verarbeitungseinheit (1, 2), und von Funktionsfähigkeitsstatusdaten der ersten Verarbeitungseinheit bezüglich der Fähigkeit der ersten Verarbeitungseinheit, die Steuerung des Motors sicherzustellen, und
- einen Schritt des Umschaltens der ersten Verarbeitungseinheit (1, 2) in den Slave-Zustand (18):
-- wenn die Zustandsdaten darauf hinweisen, dass sich die erste Verarbeitungseinheit (1) in einem passiven Zustand (16) befindet, und
-- wenn die Funktionsfähigkeitsstatusdaten auf einen Status hinweisen, in dem:
▪ die erste Verarbeitungseinheit in der Lage ist, mit der zweiten Verarbeitungseinheit zu kommunizieren,
▪ die erste Verarbeitungseinheit (1, 2) nicht in der Lage ist, die Steuerung des Motors sicherzustellen,
▪ und die erste Verarbeitungseinheit (1, 2) in der Lage ist, die ersten Aktoren anzusteuern.

2. Verfahren nach Anspruch 1, wobei
wobei die zweite Verarbeitungseinheit (2, 1) und die erste Verarbeitungseinheit (1, 2) mittels einerseits einer ersten bidirektionalen digitalen Verbindung (3), und andererseits einer zweiten bidirektionalen digitalen Verbindung (4) verbunden sind,
und wobei die zweite Verarbeitungseinheit (2, 1) zweite Funktionsfähigkeitsdaten über jede der Verbindungen (3, 4) überträgt,
der Schritt des Empfangens von zweiten Funktionsfähigkeitsdaten einen Schritt des Empfangens von dritten Funktionsfähigkeitsdaten über die erste Verbindung (3), und von vierten, redundanten Funktionsfähigkeitsdaten über die zweite Verbindung (4), einen Schritt des Verifizierens der Kohärenz der empfangenen dritten und vierten Funktionsfähigkeitsdaten, und einen Schritt des Ermittelns der übertragenen zweiten Funktionsfähigkeitsdaten abhängig vom Verifizierungsschritt umfasst.

3. Verfahren nach dem vorstehenden Anspruch, wobei der Schritt des Ermittelns der übertragenen zweiten Funktionsfähigkeitsdaten, wenn die empfangenen dritten und vierten Funktionsfähigkeitsdaten nicht kohärent sind, einen Schritt des Konsolidierens umfasst, in dessen Verlauf die übertragenen zweiten Funktionsfähigkeitsdaten anhand der Daten ermittelt werden, die über mindestens zwei aufeinanderfolgende Frames empfangen wurden.

4. Verfahren nach einem der vorstehenden Ansprüche, wobei der Schritt des Empfangens von Funktionsfähigkeitsdaten einen Schritt des Verifizierens der Integrität der empfangenen Funktionsfähigkeitsdaten umfasst.

5. Verfahren nach einem der vorstehenden Ansprüche, wobei der Schritt des Bestimmens von ersten Funktionsfähigkeitsdaten einen Schritt der Diagnose des Funktionsfähigkeitszustands bezüglich der Hardware und der Software der ersten Verarbeitungseinheit (1, 2) umfasst.

6. Verfahren nach einem der vorstehenden Ansprüche, wobei der Schritt des Umschaltens umfasst:
- einen Ermittlungsschritt, in dem die erste Verarbeitungseinheit (1, 2) anhand der ersten und zweiten Funktionsfähigkeitsdaten ermittelt, dass ihr Funktionsfähigkeitszustand besser ist als jener der zweiten Verarbeitungseinheit (2, 1),
- einen Warteschritt, in dem die erste Verarbeitungseinheit (1, 2) darauf wartet, dass die zweite Verarbeitungseinheit (2, 1) in den passiven Zustand (16) wechselt,
- einen Schritt des Umschaltens der ersten Verarbeitungseinheit (1, 2) in den aktiven Zustand (16).

7. Computerprogrammprodukt, welches Codeanweisungen umfasst für das Ausführen eines Umschaltverfahrens nach einem der vorstehenden Ansprüche, wenn dieses Programm von einem Prozessor ausgeführt wird.

8. Flugsteuerungssystem eines mindestens einen Motor umfassenden Flugzeugs, wobei das Flugsteuerungssystem eine erste Verarbeitungseinheit, eine zweite Verarbeitungseinheit und Sicherheits-Kommunikationsmittel umfasst,
wobei die erste Verarbeitungseinheit dafür konfiguriert ist, mindestens einen ersten Aktor anzusteuern, um den Motor des Flugzeugs zu steuern, dafür, mit mindestens einem ersten Sensor verbunden zu werden, und dafür, mittels mindestens einer Verbindung (3, 4) mit einer zweiten Verarbeitungseinheit (2, 1) verbunden zu werden,
wobei die zweite Verarbeitungseinheit dafür konfiguriert ist, mindestens einen zweiten Aktor anzusteuern und mit mindestens einem zweiten Sensor verbunden zu werden,
wobei die erste Verarbeitungseinheit (1, 2) weiter dafür konfiguriert ist, mit den Sicherheits-Kommunikationsmitteln verbunden zu werden,
wobei es die Sicherheits-Kommunikationsmittel (13, 14) ermöglichen, im Falle von Versagen der mindestens einen sie verbindenden Verbindung (3, 4) Datenaustausche zwischen der ersten Verarbeitungseinheit (1, 2) und der zweiten Verarbeitungseinheit (2, 1) sicherzustellen, wobei die Sicherheits-Kommunikationsmittel ein Sensoren- oder Aktoren-Netzwerk (13) und/oder ein gesichertes integriertes Netzwerk für die Avionik (14) umfassen,
und umfassend:
- Mittel zum Senden von Erfassungsdaten bezüglich des mindestens einen ersten Sensors, und von Aktorendaten bezüglich des mindestens einen ersten Aktors an die zweite Verarbeitungseinheit,
- Mittel zum Empfangen, von der zweiten Verarbeitungseinheit her kommend, der Erfassungsdaten bezüglich des mindestens einen zweiten Sensors, und der Aktorendaten bezüglich des mindestens einen zweiten Aktors,
- Mittel zum Empfangen von Funktionsfähigkeitsdaten bezüglich des Funktionsfähigkeitszustands der zweiten Verarbeitungseinheit (2, 1), zweite Funktionsfähigkeitsdaten genannt,
- Mittel zum Ermitteln von Funktionsfähigkeitsdaten bezüglich der Funktionsfähigkeit der ersten Verarbeitungseinheit (1, 2), erste Funktionsfähigkeitsdaten genannt,
- Umschaltmittel zum Umschalten der ersten Verarbeitungseinheit (1, 2), abhängig von den empfangenen zweiten Funktionsfähigkeitsdaten und den ermittelten ersten Funktionsfähigkeitsdaten, von einem ersten Zustand in einen zweiten Zustand,
wobei sich die Zustände unter einem aktiven Zustand (15), in dem die erste Verarbeitungseinheit (1, 2) die Steuerung des Motors des Flugzeugs sicherstellt, einem passiven Zustand (16), in dem die erste Verarbeitungseinheit (1, 2) die Steuerung des Motors des Flugzeugs nicht sicherstellt, und einem Slave-Zustand (18) befinden, in dem die erste Verarbeitungseinheit (1, 2) die Ansteuerung der ersten Aktoren für die Steuerung des Motors des Flugzeugs an die zweite Verarbeitungseinheit (2, 1) abtritt,
wobei die Umschaltmittel dafür konfiguriert sind:
- anhand der ersten Funktionsfähigkeitsdaten Zustandsdaten bezüglich des Zustands der ersten Verarbeitungseinheit (1, 2), und Funktionsfähigkeitsstatusdaten der ersten Verarbeitungseinheit bezüglich der Fähigkeit der ersten Verarbeitungseinheit, die Steuerung des Motors sicherzustellen, zu ermitteln, und
- die erste Verarbeitungseinheit (1, 2) in den Slave-Zustand (18) umzuschalten:
-- wenn die Zustandsdaten darauf hinweisen, dass sich die erste Verarbeitungseinheit (1) in einem passiven Zustand (16) befindet, und
-- wenn die Funktionsfähigkeitsstatusdaten auf einen Status hinweisen, in dem:
▪ die erste Verarbeitungseinheit in der Lage ist, mit der zweiten Verarbeitungseinheit zu kommunizieren,
▪ die erste Verarbeitungseinheit (1, 2) nicht in der Lage ist, die Steuerung des Motors sicherzustellen,
▪ und die erste Verarbeitungseinheit (1, 2) in der Lage ist, die ersten Aktoren anzusteuern.

9. Flugsteuerungssystem nach dem vorstehenden Anspruch, wobei die zwei Verarbeitungseinheiten (1, 2) mittels einerseits einer ersten bidirektionalen digitalen Verbindung (3), und andererseits einer zweiten bidirektionalen digitalen Verbindung (4) verbunden sind, wobei die zweite Verbindung (4) mit der ersten Verbindung (3) redundant ist, und die erste und zweite Verbindung (3, 4) gleichzeitig aktiv sein können.

10. Flugsteuerungssystem nach Anspruch 9, wobei die erste und zweite Verbindung (3, 4) CCDL-, "Cross Channel Data Link", Verbindungen sind.

11. Flugsteuerungssystem nach Anspruch 8, wobei das gesicherte integrierte Netzwerk (14) ein redundantes Ethernet-Netzwerk vom Typ AFDX, "Avionics Full DupleX Switched Ethernet", oder µAFDX ist.

## Claims

1. Switching method applied by a first processing unit (1, 2) of a flight control system of an aircraft comprising at least one engine,
said first processing unit (1, 2) being configured for controlling at least one first actuator so as to control the engine of the aircraft, and being configured to be connected to at least one first sensor and to be connected via at least one link (3, 4) to a second processing unit (2, 1), configured for controlling at least one second actuator and being connected to at least one second sensor, said first processing unit (1, 2) being further configured so as to be connected to emergency communication means (13, 14) giving the possibility of ensuring exchanges of data between the first processing unit (1, 2) and the second processing unit (2, 1) in the case of failures of said at least one link (3, 4) connecting them, said emergency communication means comprising a network of sensors or actuators (13) and/or an onboard secure network for avionics (14),
said method comprising steps of:
- sending to the second processing unit acquisition data relating to the at least one first sensor and actuator data relating to the at least one first actuator,
- receiving from the second processing unit acquisition data relating to the at least one second sensor and actuator data relating to the at least one second actuator,
- receiving a health data item relating to the health condition of the second processing unit (2, 1), called the second health data item,
- determining a health data item relating to the health of said first processing unit (1, 2), called the first health data item,
- switching of said first processing unit (1, 2) from a first state to a second state, depending on said received second health data item and on said determined first health data item,
said steps of sending and receiving acquisition data and of receiving a health data item being applied via said at least one link or said emergency communication means, and said states being from among an active state (15) in which the first processing unit (1, 2) ensures control of the engine of the aircraft, a passive state (16) in which the first processing unit (1, 2) does not ensure the control of the engine of the aircraft and a slave state (18) in which the first processing unit (1, 2) gives over to the second processing unit (2, 1) the control of said first actuators for controlling the engine of the aircraft, wherein the switching step comprises:
- a step of determining, from the first health data item, a state data item relating to the state of said first processing unit (1, 2) and from a health status data item of the first processing unit relating to the capability of the first processing unit of ensuring control of the engine, and
- a step of switching said first processing unit (1, 2) into the slave state (18):
- when the state data item indicates that the first processing unit (1) is in a passive state (16), and
- when the health status data item indicates a status in which:
▪ the first processing unit is capable of communicating with the second processing unit,
▪ the first processing unit (1, 2) is incapable of ensuring the control of the engine,
▪ and the first processing unit (1, 2) is capable of controlling the first actuators.

2. Method according to claim 1, wherein
the second processing unit (2, 1) and the first processing unit (1, 2) being connected firstly via firstly a first bidirectional digital link (3) and secondly via a second bidirectional digital link (4),
and the second processing unit (2, 1) transmitting a second health data item over each of the links (3, 4),
the step of receiving a second health data item comprises a step of receiving a third health data item over the first link (3) and a redundant fourth health data item over the second link (4), a step of verifying consistency of said third and fourth received health data, and a step of determining said second health data item transmitted according to said verification step.

3. Method according to the preceding claim, wherein the step of determining the transmitted second health data item comprises, when said third and fourth received health data are not consistent, a consolidation step during which the transmitted second health data item is determined from data received over at least two successive frames.

4. Method according to any of the preceding claims, wherein the step of receiving a second health data item comprises a step of verifying integrity of said received health data item.

5. Method according to any of the preceding claims, wherein the step of determining a first health data item comprises a step of diagnosing the health condition relating to the hardware and to the software of said first processing unit (1, 2).

6. Method according to any of the preceding claims, wherein the switching step comprises:
- a determination step, in which the first processing unit (1, 2) determines from said first and second health data that its health condition is better than that of the second processing unit (2, 1),
- a waiting step in which said first processing unit (1, 2) waits for the second processing unit (2, 1) to switch into the passive state (16),
- a step of switching the first processing unit (1, 2) into the active state (16).

7. Computer program product comprising code instructions for executing a switching method according to any one of the preceding claims when this program is executed by a processor.

8. System for controlling the flight of an aircraft comprising at least one engine, the flight control system comprising a first processing unit, a second processing unit, and emergency communication means,
in which the first processing unit is configured to control at least one first actuator, so as to control the engine of the aircraft, in order to be connected to at least one first sensor, and to be connected via at least one link (3, 4) to the second processing unit (2, 1),
in which the second processing unit is configured to control at least one second actuator and to be connected to at least one second sensor,
in which said first processing unit (1, 2) is further configured to be connected to the emergency communication means,
in which the emergency communication means (13, 14) give the possibility of ensuring exchanges of data between the first processing unit (1, 2) and the second processing unit (2, 1) in the case of failures of said at least one link connecting them (3, 4), said emergency communication means comprising a network of sensors or actuators (13) and/or an onboard secure network for avionics (14),
and comprising:
- means for sending to the second processing unit acquisition data relating to the at least one first sensor and actuator data relating to the at least one first actuator,
- means for receiving, from the second processing unit, acquisition data relating to the at least one second sensor and actuator data relating to the at least one second actuator,
- means for receiving a health data item relating to the health condition of the second processing unit (2, 1), called the second health data item,
- means for determining a health data item relating to the health of said first processing unit (1, 2), called the first health data item,
- switching means for switching said first processing unit (1, 2) from a first state to a second state, depending on said received second health data item and on said determined first health data item,
said states being from among an active state (15) in which the first processing unit (1, 2) ensures control of the engine of the aircraft, a passive state (16) in which the first processing unit (1, 2) does not ensure the control of the engine of the aircraft and a slave state (18) in which the first processing unit (1, 2) gives over to the second processing unit (2, 1) the control of said first actuators for controlling the engine of the aircraft,
in which the switching means are configured to:
- determine, from the first health data item, a state data item relating to the state of said first processing unit (1, 2) and from a health status data item of the first processing unit relating to the capability of the first processing unit of ensuring control of the engine, and
- switch said first processing unit (1, 2) into the slave state (18):
- when the state data item indicates that the first processing unit (1) is in a passive state (16) and,
- when the health status data item indicates a status in which:
▪ the first processing unit is capable of communicating with the second processing unit,
▪ the first processing unit (1, 2) is incapable of ensuring the control of the engine,
▪ and the first processing unit (1, 2) is capable of controlling the first actuators.

9. Flight control system according to the preceding claim, wherein both processing units (1, 2) are connected firstly via a first bidirectional digital link (3) and secondly via a second bidirectional digital link (4), said second link (4) being redundant with the first link (3), and said first and second links (3, 4) being able to be active concomitantly.

10. Flight control system according to claim 9, wherein the first and second links (3, 4) are CCDL ("Cross Channel Data Link") links.

11. Flight control system according to claim 8, wherein the onboard secure network (14) is a redundant Ethernet network of the AFDX ("Avionics Full DupleX switched Ethernet") or µAFDX type.
